(19) **Europäisches Patentamt / European Patent Office / Office européen des brevets**

(11) **EP 4 693 222 A1**

(12) # EUROPEAN PATENT APPLICATION
published in accordance with Art. 153(4) EPC

(43) Date of publication:
**11.02.2026 Bulletin 2026/07**

(21) Application number: **24784166.1**

(22) Date of filing: **28.03.2024**

(51) International Patent Classification (IPC):
***G06V 20/56*** (2022.01)     ***G06V 10/80*** (2022.01)

(52) Cooperative Patent Classification (CPC):
Y02A 90/10

(86) International application number:
**PCT/CN2024/084447**

(87) International publication number:
**WO 2024/208081 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310369328**

(71) Applicant: **Hangzhou Hikvision Digital Technology Co., Ltd.**
**Hangzhou, Zhejiang 310051 (CN)**

(72) Inventors:
• **ZHANG, Jingwei**
 **Shanghai 201821 (CN)**
• **FANG, Zicheng**
 **Shanghai 201821 (CN)**
• **LI, Hao**
 **Shanghai 201821 (CN)**
• **ZHAO, Xian**
 **Shanghai 201821 (CN)**

(74) Representative: **Michalski Hüttermann & Partner Patentanwälte mbB**
**Kaistraße 16A**
**40221 Düsseldorf (DE)**

(54) **METHOD AND APPARATUS FOR TARGET DETECTION, ELECTRONIC DEVICE, AND MACHINE-READABLE STORAGE MEDIUM**

(57) Provided is a method for target detection, comprising: determining a candidate target frame according to a target query (S100); sampling radar points according to the candidate target frame to give radar points for processing, and extracting features from the radar points for processing to give radar features for fusion (S110); sampling image features according to the candidate target frame to give image features for fusion (S120); using a cross-attention mechanism to perform deep feature fusion on the radar features for fusion and the image features for fusion that are interrelated to give a deep fusion feature; and performing target detection on the deep fusion feature (S140). The method features optimized target detection performance.

FIG. 1

## Description

## TECHNICAL FIELD

The present disclosure relates to the field of data processing, in particular, to an object detection method and apparatus, an electronic device and a machine-readable storage medium.

## BACKGROUND

Millimeter-wave radars and cameras are widely used in automatic driving. The cameras have abundant texture information, which can accurately obtain the size and class information of an object, but exhibit limited performance in ranging and velocity measurement, and are susceptible to light, rain and fog, etc.; the millimeter wave radars have good performance in ranging and velocity measurement, and have strong robustness, but have defects in angle measurement and static obstacle recognition. Therefore, the object detection performance can be improved by fusing the millimeter wave radar and the camera.

In recent years, there have been some Radar and Vision (RV) fusion-based 3D detection schemes, which are extended to a multi-modal fusion 3D object detection framework based on a multi-view image 3D detection model. The main implementation scheme includes the following.

The reference point is generated by Query (a query in a Transformer model). On the one hand, radar point clouds are sampled within a circular region centered at the reference point, and the sampled radar points are input into a fully connected network to extract radar features. On the other hand, the reference point is projected to each camera, and bilinear interpolation is used to extract image features. Finally, the image features and the matched radar features are connected and fused by concat (a merging operation), and the fusion result is sent to a detection head (in the Transformer model) to predict a 3D object.

In practice, it is found that when concat is used to fuse image features and radar features, the performance of feature fusion is poor, which affects the performance of 3D object detection.

## SUMMARY

In view of this, the present disclosure provides an object detection method, apparatus, electronic device, and machine-readable storage medium to optimize object detection performance.

Specifically, the present disclosure is implemented in the following technical scheme.

According to a first aspect of an example of the present disclosure, there is provided an object detection method, including:

determining at least one candidate bounding box according to an object query;

performing radar point sampling according to the at least one candidate bounding box to obtain radar points to be processed, and performing feature extraction on the radar points to be processed to obtain radar features to be fused;

performing image feature sampling according to the at least one candidate bounding box to obtain an image feature to be fused;

performing deep feature fusion on the radar features to be fused and the image feature to be fused which are associated with each other, by using a cross-attention mechanism, to obtain a deep fusion feature, where the radar features to be fused and the image feature to be fused associated with each other are radar features and the image feature associated with a same candidate bounding box;

performing object detection on the deep fusion feature.

According to a second aspect of an example of the present disclosure, there is provided an object detection apparatus including:

a determining unit, configured to determine at least one candidate bounding box according to an object query;

a radar feature obtaining unit, configured to perform radar point sampling according to the at least one candidate bounding box to obtain radar points to be processed, and perform feature extraction on the radar points to be processed to obtain radar features to be fused;

an image feature obtaining unit, configured to perform image feature sampling according to the at least one candidate bounding box to obtain an image feature to be fused;

a feature fusion unit, configured to perform deep feature fusion on the radar features to be fused and the image feature to be fused which are associated with each other, by using a cross-attention mechanism, to obtain a deep fusion feature; where the radar features to be fused and the image feature to be fused associated with each other are radar features and the image feature associated with a same candidate bounding box; and

an object detection unit, configured to perform object detection on the deep fusion feature.

According to a third aspect of an example of the present disclosure, there is provided an electronic device comprising a processor and a storage, where the storage stores machine-executable instructions that are executed by the processor, and the processor is configured to execute the machine-executable instructions to perform the method provided in the first aspect.

According to a fourth aspect of an example of the present disclosure, there is provided a machine-readable storage medium storing machine-executable instructions that when executed by a processor, cause the processor to implement the method provided in the first aspect.

The technical scheme provided in the present disclosure can at least bring the following beneficial effects.

Under a condition that at least one candidate bounding box is determined according to an object query, on the one hand, radar point sampling is performed according to the candidate bounding box to obtain radar points to be processed, and feature extraction is performed on the radar points to be processed to obtain radar features to be fused; on the other hand, image feature sampling is performed according to the candidate bounding box to obtain an image feature to be fused. For the radar features to be fused and the image feature to be fused, which are correlated with each other, a cross-attention mechanism is utilized to perform deep feature fusion on the radar features to be fused and the image feature to be fused so as to obtain a deep fusion feature, and object detection is performed on the deep fusion feature. By utilizing the cross-attention mechanism to deeply fuse radar and image features, data characteristics of sensor data of different modalities are fully considered, the feature fusion performance is optimized, the deep fusion feature with higher quality is obtained, and the object detection performance is thereby optimized.

**BRIEF DESCRIPTION OF DRAWINGS**

FIG. 1 is a schematic flowchart of an object detection method according to an example of the present disclosure.

FIG. 2 is a schematic diagram of a framework of a fusion detection system according to an example of the present disclosure.

FIG. 3 is a schematic workflow of a multi-modal data association module according to an example of the present disclosure.

Fig. 4 is a schematic flowchart of a deep feature fusion according to an example of the present disclosure.

FIG. 5 is a schematic structural diagram of an object detection apparatus according to an example of the present disclosure.

FIG. 6 is a schematic diagram of a hardware structure of an electronic device according to an example of the present disclosure.

**DETAILED DESCRIPTION**

Detailed description of the examples will be made herein, examples of which are illustrated in the accompanying drawings. When the following description refers to the accompanying drawings, the same numbers in different accompanying drawings indicate the same or similar elements, unless otherwise indicated. The implementations described in the following examples are not intended to represent all implementations consistent with the present disclosure. Rather, they are merely examples of apparatus and methods consistent with some aspects of the present disclosure, as detailed in the appended claims.

The terms used herein are for the purpose of describing particular examples only and are not intended to be limiting of the present disclosure. As used in the present disclosure and the appended claims, the singular forms "a," "an," "said," and "the" are intended to include the plural forms as well, unless the context clearly dictates otherwise.

In order to enable those skilled in the art to better understand the technical schemes provided in the examples of the present disclosure, and to enable the foregoing objects, features, and advantages of the embodiments of the present disclosure to be more clear and understandable, the technical solutions in the embodiments of the application are described in further detail in the following with reference to the accompanying drawings.

It should be noted that the sequence number of each step in the examples of the present disclosure does not mean the order of execution, and the execution order of each process shall be determined by the function and internal logic of the process, and shall not constitute any limitation to the implementation process of the examples of the present disclosure.

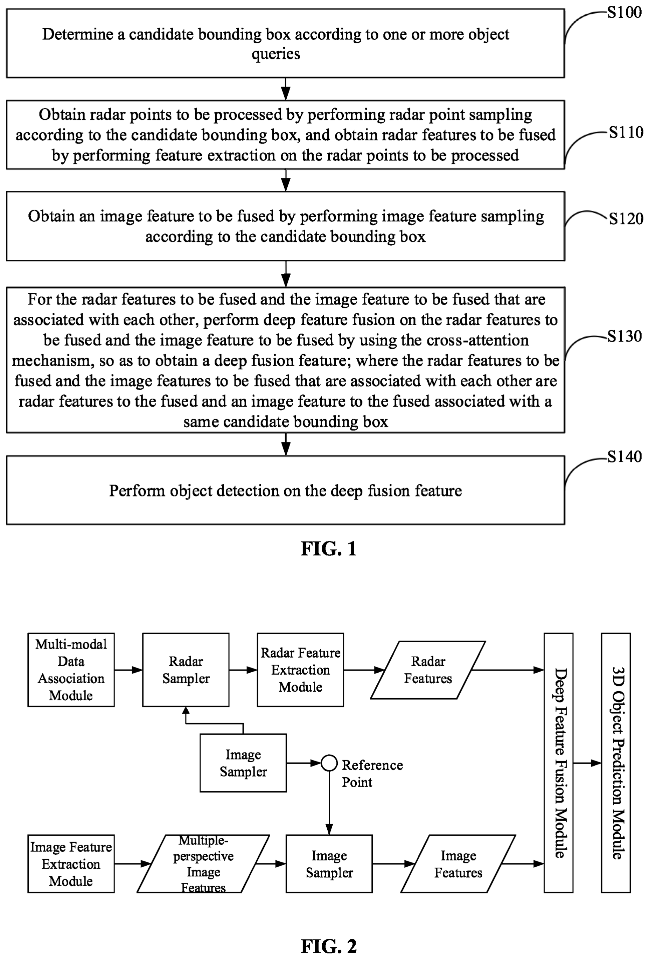

FIG. 1 is a flowchart of an object detection method provided in an example of the present disclosure. As shown in FIG. 1, the object detection method may include the following steps.

In step S100, a candidate bounding box is determined according to an object query. In some examples, the object query is a concept in a transformer network. In the transformer network, the query is learnable, and a final bounding box can be regressed from a set query. The candidate bounding box is a bounding box (non-final) obtained as an intermediate detection result. The final bounding box is obtained through at least one round of iteration of the candidate bounding box.

By way of example, at least one candidate bounding box may be generated using a neural network (e.g., a multi-layer fully connected layer) based on an object query. In some examples, one query may correspond to one bounding box. For example, if 900 queries are set at initialization, a maximum of 900 objects may be detected. In other examples, one query may correspond to more than one bounding box, which is not limited in the present disclosure.

For example, the candidate bounding box is a 3D bounding box.

In step S110, radar points to be processed are obtained by performing radar point sampling according to the candidate bounding box, and radar features to be fused are obtained by performing feature extraction on the radar points to be processed.

In step S120, an image feature to be fused is obtained by performing image feature sampling according to the candidate bounding box.

In the example of the present disclosure, for any candidate bounding box, on the one hand, radar point sampling may be performed according to the candidate bounding box to obtain radar points to be processed.

For example, point cloud processing may be performed on data captured by radars to obtain a radar point cloud and then the radar point cloud may be sampled within the candidate bounding box to obtain a certain number of radar points as radar points to be processed. In some examples, the radar point sampling may be searching the nearest (Euclidean distance) K radar points of each reference point.

For the radar points to be processed obtained by sampling, feature extraction may be performed to obtain the radar features to be fused.

For example, original features of the radar points may include point cloud coordinates (three-dimensional coordinates), lateral and longitudinal velocities, Radar Cross Section (RCS), and Signal to Noise Ratio (SNR).

For radar points to be processed, feature extraction may be performed by using a neural network (such as a multi-layer fully connected layer) according to the original features of the radar points to be processed to obtain the radar features to be fused.

For example, the dimensionality of the original features of the radar points to be processed may be increased by using the neural network to increase the dimensionality of the original features of the radar points to be processed to obtain the radar features to be fused.

Taking the original features of radar points including point cloud 3D coordinates, horizontal depth, vertical depth, RCS and SNR as an example, the dimensionality of the original features is 7. After the dimensionality increase processing via the neural network, 64/128/256-dimensional radar features to be fused may be obtained.

For example, a plurality of radar points to be processed may be obtained by sampling within a candidate bounding box, so that an object query may obtain a plurality of radar features (one radar point to be processed corresponds to one radar feature (multi-dimensional feature, for example, 64-dimensional feature)).

On the other hand, image feature sampling may be performed according to the candidate bounding box to obtain the image feature to be fused.

For example, in order to realize image feature sampling, pre-deployed multiple-perspective cameras may be used to acquire images of different views, and image feature extraction may be performed on the acquired images to obtain a plurality of image feature maps.

For example, assuming that M (M > 1) cameras (also referred to as cameras) with different perspectives are deployed on a vehicle, a feature extraction model may be used to extract image features from M frames of images acquired by the M cameras at the same time (a tolerable error is allowed among acquisition times of different cameras), so as to obtain M * N image feature maps. In an example, N is related to parameters of the feature extraction model, for example, the feature extraction model includes N layers.

For any candidate bounding box, the center point of the candidate bounding box may be taken as a reference point, the reference point is respectively projected onto each image feature map through coordinate system conversion according to pre-calibrated intrinsic and extrinsic parameters of each camera, and a feature point corresponding to the reference point in each image feature map is obtained by using linear interpolation.

For example, in a case where M * N image feature maps exist, the reference point may obtain M * N corresponding feature points.

For the reference point, the obtained corresponding feature points in all image feature maps may be subjected to feature aggregation to obtain an aggregation feature. For example, the feature points corresponding to the reference point in all image feature maps may be subjected to feature aggregation by using a cross-attention mechanism. The cross-attention mechanism is a mechanism used in architectures for modern natural language processing (NLP) tasks, such as the Transformer model.

In an example, to optimize the performance of radar point sampling, radar feature extraction, and image feature sampling, the object query may be iteratively updated by using the above image feature sampling method, and radar point sampling, radar feature extraction, and image feature sampling may be performed according to the iteratively updated object query.

For example, after determining a candidate bounding box corresponding to the object query and obtaining an aggregation feature by using the manner described in the above examples, the object query may be updated according to the aggregation feature to obtain an updated object query.

For the updated object query, the process of determining the candidate bounding box and obtaining the aggregation feature may repeated again in the manner described in the above examples, so as to iteratively update the object query until the number of iterations reaches a preset number of times.

When the iterative update of the object query is completed, the candidate bounding box may be determined according to the updated object query, and radar point sampling and feature extraction are performed in the manner described in the above examples to obtain the radar features to be fused, and image feature sampling is performed to obtain the image feature to be fused.

It should be noted that the initial object query may be generated via random initialization. In some examples, the random initialization may involve initializing each parameter in the object query to a random number within a certain closed interval.

In step S130, for the radar features to be fused and the image feature to be fused that are associated with each other, deep feature fusion is performed on the radar features to be fused and the image feature to be fused by using the cross-attention mechanism, so as to obtain a deep fusion feature; where the radar features to be fused and the image feature to be fused that are associated with each other are radar features to be fused and an image feature to be fused associated with a same candidate bounding box.

In the example of the present disclosure, considering that the radar point cloud and the images belong to two different types of sensor data, the two types of data have different characteristics, and different weights are required to be used for processing during fusion. In addition, considering that the points in the radar point cloud include object-reflected points and noise points, different radar points need to be processed with different weights during fusion. Therefore, using a concatenation-based approach to fuse radar features and image features has significant defects, and results a poor feature fusion performance.

In consideration of the above problems, in an example of the present disclosure, for the radar features to be fused and the image feature to be fused associated with the same candidate object bounding box (herein referred to as correlated radar features to be fused and image feature to be fused), the cross attention mechanism may be used to perform deep feature fusion on the radar features to be fused and the image feature to be fused, so as to obtain a deep fusion feature.

In step S140, object detection is performed on the deep fusion feature. In some examples, the position and classification result of the final bounding box may be regressed by means of a post-appended detection head (a module of a deep learning detection network).

In an example of the present disclosure, under a condition that the deep fusion feature is obtained in the manner described in the above example, object detection may be performed according to the deep fusion feature to realize the position and class prediction of the final bounding box.

In some examples, the class of the bounding box is determined by requirements of an application. For example, in an automatic driving scene, there are classes such as a motor vehicle, a non-motor vehicle, and human.

The scales of the bounding box include the coordinates of the center point of the bounding box, the length, width and height of the bounding box, and the angle of the bounding box.

It can be seen that in the method flow shown in FIG. 1, under the condition that the candidate bounding box is determined according to the object query, on the one hand, radar point sampling is performed according to the candidate bounding box to obtain radar points to be processed, and feature extraction is performed on the radar points to be processed to obtain radar features to be fused; on the other hand, image feature sampling is performed according to the candidate bounding box to obtain an image feature to be fused; for the radar features to be fused and the image feature to be fused which are correlated with each other, deep feature fusion is performed by using the cross-attention mechanism to obtain a deep fusion feature, and object detection is performed on the deep fusion feature. Performing deep fusion on the radar features and the image feature by using the cross-attention mechanism fully considers the data characteristics of the sensor data of different modalities, the feature fusion performance is optimized, the deep fusion feature with higher quality is obtained, and the object detection performance is optimized.

In some examples, performing the radar point sampling according to the candidate bounding box to obtain the radar points to be processed may include the following.

For any candidate bounding box, an expansion process is performed on the candidate bounding box to obtain a processed candidate bounding box.

Within the processed candidate bounding box, $K1$ radar points which are closest to the center point of the processed candidate bounding box are selected, and the selected radar points are designated as the radar points to be processed, where $K1$ is a positive integer. In an example, the expansion process may be understood as a process of expanding the size of the bounding box.

For example, in order to improve the reliability of radar point sampling, the radar point sampling may be constrained according to the candidate bounding box.

For any candidate bounding box, when radar point sampling is performed according to the candidate bounding box, radar point sampling may be performed within the candidate bounding box and radar points outside the candidate bounding box are not sampled.

Considering that the accuracy of the candidate bounding box generated according to the object query is not very high, in order to improve the reliability of the constraint of the candidate bounding box, an expansion process may be performed on the candidate bounding box.

Correspondingly, for any candidate bounding box, the candidate bounding box may be subjected to an expansion process to obtain a processed candidate bounding box, and $K1$ radar points which are closest to the center point of the processed candidate bounding box are selected within the processed candidate bounding box as the radar points to be processed.

Where $K1$ is an integer and $K1 > 1$.

In an example, for any candidate bounding box, an expansion coefficient of the candidate bounding box is determined according to a distance from the center point of the candidate bounding box to an origin, and is positively correlated with the distance.

For example, considering that generally the farther the reference point is, the greater the ranging error will be. Therefore, in a case of performing the expansion process on the candidate bounding box, the expansion coefficient of the candidate bounding box may be determined according to the distance from the center point of the candidate bounding box to the origin.

Taking an automatic driving scene as an example, the origin may be the center position of the ego vehicle (i.e., the vehicle currently applying the scheme for object detection provided in the example of the present disclosure).

In an example, the expansion coefficient of the candidate bounding box is positively correlated with the distance from the center point of the candidate bounding box to the origin, that is, the farther the distance is, the greater the expansion coefficient is.

In an example, for any processed candidate bounding box, when the number of radar points within the processed candidate bounding box is less than K1, zero-padding is applied to obtain K1 radar points to be processed.

In an example, considering that in an actual scene, there may be a situation that the number of radar points within the candidate bounding box is less than K1, in this case, K1 radar points to be processed may be obtained by a supplement based on zero-padding, so as to improve the data processing efficiency under the condition of ensuring the reliability of the radar points to be processed obtained by sampling.

In some examples, performing deep feature fusion on the radar features to be fused and the image feature to be fused by using the cross-attention mechanism to obtain the deep fusion feature includes the following.

An object query Query is generated by using a fully connected network according to the image feature to be fused.

A key Key and a value Value are respectively generated by using a fully connected network according to the radar features to be fused.

An attention matrix is generated according to the Query and the Key.

A deep fusion feature is determined according to the attention matrix and the Value.

In an example, fully connected networks used for generating Query, for generating Key, and for generating Value are different fully connected networks. In some examples, it is also possible to use the same fully connected network, but with different weights.

In an example, the attention matrix is generated according to the Query and the Key in a manner of:

$$A = \text{Query}*Key^T$$

Where A is the attention matrix.

Determining the deep fusion feature according to the attention matrix and the Value is implemented in the following manner:

$$C = softmax(\frac{A}{\sqrt{d}}) * Value$$

Where C is the deep fusion feature and d is a normalization factor.

To enable those skilled in the art to better understand the technical schemes provided in the examples of the present disclosure, the technical schemes provided in the examples of the present disclosure are described in the following in conjunction with specific examples.

In the example, several on-vehicle cameras and millimeter wave radars may be equipped.

In an example, the cameras are respectively mounted at the front, rear, left and right positions of the vehicle, and angular millimeter wave radars are respectively mounted at the four corners of the vehicle.

FIG. 2 is a schematic diagram of the framework of a fusion detection system according to an example of the present disclosure. As shown in FIG. 2, the fusion detection system may include: an image feature extraction module, a multi-modal data association module, a radar feature extraction module, a deep feature fusion module, and a 3D object prediction module, etc.

The main flow of the fusion detection system for realizing object detection includes the following.

After the images shot by the multiple-perspective cameras pass through the image feature extraction module, 2D image features are obtained. A candidate bounding box is generated based on an object query. Image features and a radar point cloud are sampled according to the candidate bounding box to complete the multi-modal data association. Each object query corresponds to radar points obtained by sampling the radar point cloud, and the radar features are obtained after the sampled radar points pass through the radar feature extraction module. The associated radar features and image feature are sent to the deep feature fusion module for deep fusion, and an obtained fusion result is sent to the 3D object prediction module to obtain a final 3D detection result.

The following is a detailed description of the functional implementation of each module.

1. Image feature extraction module

Image feature extraction is performed on M multiple-perspective camera images, and a feature extractor generally includes a backbone (backbone network) and a neck (a type of network for extracting more complex features, generally located behind the backbone network and in front of a prediction head).

In an example, the backbone may employ ResNet101 and the neck employs an N-layer Feature Pyramid Network (FPN). After image feature extraction, M * N image feature maps are generated.

2. Multi-modal data association module

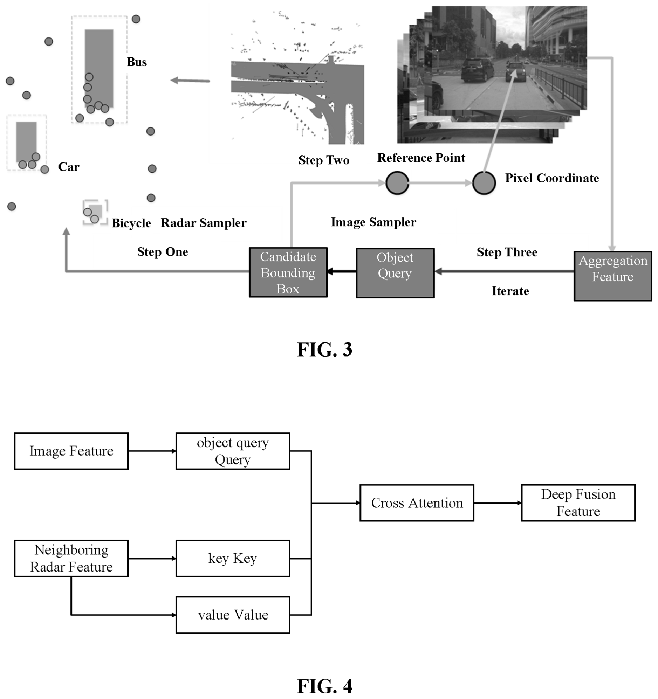

The multi-modal data association module may include an image sampler and a radar sampler, which respectively sample and associate the images shot by the multiple-perspective cameras and the radar point cloud captured by the millimeter wave radars, as shown in FIG. 3, and the whole process may include three steps.

2.1. An object query generates a candidate bounding box (3D bounding box) through a network (such as a multi-layer fully connected network).

For example, considering that the accuracy of a candidate bounding box generated according to an object query is not very high, the reliability of the constraint on the sampled radar points according to the candidate bounding box may be improved by performing an expansion process on the candidate bounding box.

Considering the characteristics of visual imaging, the farther the distance is, the more inaccurate the positioning is. Therefore, the expansion coefficient (also known as a scaling factor) for expanding the candidate bounding box is related to the distance.

For example, the scaling factor σ may be calculated as:

$$\sigma = 2 * e^{\frac{d}{d\max}}$$

Where d is the distance from the center point of the candidate bounding box to the origin, and dmax is a preset maximum detection distance.

For example, the length and width of the candidate bounding box may be respectively expanded according to the scaling factor σ, and K1 radar points that are closest to the center point of the expanded candidate bounding box may be selected within the expanded candidate bounding box as radar points to be processed, so as to realize radar point sampling.

In an example, if the number of radar points within the expanded candidate bounding box is less than K1, zero-padding may be applied for supplementing.

2.2. Image feature sampling.

In an example, the center point of the candidate bounding box may be taken as the reference point, and the reference point is projected onto each image feature map through coordinate system conversion according to the pre-calibrated intrinsic and extrinsic parameters of each camera, and a feature point corresponding to the reference point in each image feature map is obtained by using linear interpolation (one candidate bounding box corresponds to M * N feature points).

2.3. For the obtained M * N feature points, feature aggregation is performed using the cross-attention mechanism to obtain an aggregation feature.

It should be noted that, to optimize the performance of radar point sampling, radar feature extraction, and image feature sampling, the object query may be iteratively updated by using the above image feature sampling method, and radar point sampling, radar feature extraction, and image feature sampling may be performed according to the iteratively updated object query.

3. Radar feature extraction module

For example, original features of radar points may include the point cloud coordinates (three-dimensional coordinates), lateral and longitudinal velocities, RCS, SNR, and the like.

According to the original features of the radar points to be processed, the neural network (such as a multi-layer fully connected layer) may be used for feature extraction to obtain the radar features to be fused.

In an example, for one object query, K1 radar features to be fused may be obtained.

4. Deep feature fusion module

After the processing of the above modules, the image feature and the radar features complete a one-to-many (K1) association, and are then input into the deep feature fusion module, which is implemented as shown in FIG. 4.

Considering that radar point cloud and an image belong to two different types of sensor data, their data have their own characteristics. In addition, for the radar features to be fused corresponding to different radar points to be processed, since the positions of the radar points to be processed are different, the importance of the radar points is not exactly the same, the closer the point is to the center point, the higher the possibility that it belongs to the object; the farther it is from the center point, the more likely it is to be a point of another object or a noise point.

Therefore, using a concatenation-based approach to fuse radar features and image features has obvious defects, leading to performance degradation.

In this example, the cross-attention mechanism is introduced to perform deep feature fusion.

For example, the image features are processed through a fully connected network to generate an object query Query, and neighboring radar features generates a key Key and a value Value via a fully connected network.

For example, assuming that the image feature to be fused is $f^{img} \in \mathbb{R}^{1 \times C_1}$, and the radar features to be fused are $f^{radar} \in \mathbb{R}^{1 \times C_2}$, a multilayer perceptron (MLP) network may be used for mapping, and the specific formulas are as follows:

$$f^{img} \in \mathbb{R}^{1 \times C_1}$$

$$f^{radar} \in \mathbb{R}^{1 \times C_2}$$

$$Query = \text{MLP}_q(f^{img}) \in \mathbb{R}^{1 \times C_3}$$

$$Key = \text{MLP}_k(f^{radar}) \in \mathbb{R}^{K1 \times C_3}$$

$$Value = \text{MLP}_v(f^{radar}) \in \mathbb{R}^{K1 \times C_3}$$

$$A = Query * Key^T \in \mathbb{R}^{1 \times K1}$$

$$C = softmax(\frac{A}{\sqrt{d}}) * Value \in \mathbb{R}^{1 \times C_3}$$

Where $C_1$ is the dimensionality of the image feature to be fused, $C_2$ is the dimensionality of the radar features to be fused, $d = C_3$ is a scale factor (also referred to as a normalization factor), A is an attention matrix for measuring the importance of each radar feature, and C is a deep fusion feature.

5. 3D object prediction module

In an example, object detection may be performed according to the deep fusion feature to realize the position and class prediction of the bounding box.

In an example, the class of the bounding box is determined by requirements of an application. For example, in an automatic driving scene, there are classes such as motor vehicles, non-motor vehicles, and humans.

The scales of the bounding box include the coordinates of the center point of the bounding box, the length, width and height of the bounding box, and the angle of the bounding box.

The method provided in the present disclosure has been described above. The apparatus provided in the present disclosure is described in the following.

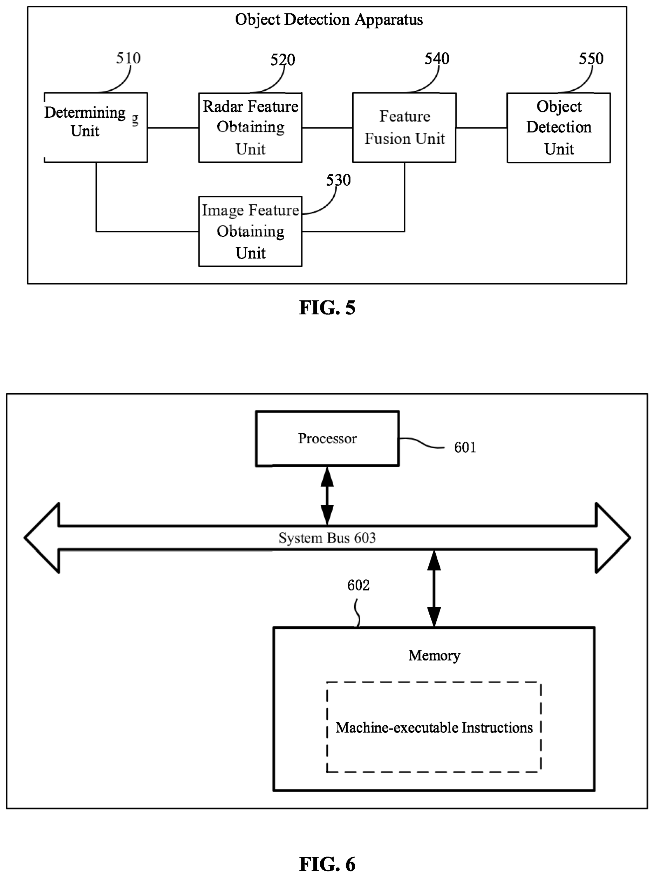

FIG. 5 is a schematic structural diagram of an object detection device according to an example of the present disclosure. As shown in FIG. 5, the object detection device may include the following.

A determining unit 510, is configured to determine at least one candidate bounding box according to an object query.

A radar feature obtaining unit 520, is configured to perform radar point sampling according to the candidate bounding box to obtain radar points to be processed, and perform feature extraction on the radar points to be processed to obtain radar features to be fused.

An image feature obtaining unit 530, is configured to perform image feature sampling according to the at least one candidate bounding box to obtain image features to be fused.

A feature fusion unit 540, is configured to perform feature deep fusion on the radar features to be fused and the image feature to be fused which are associated with each other, by using a cross-attention mechanism, to obtain a deep fusion feature; where the radar features to be fused and the image feature to be fused which are associated with each other are the radar features to be fused and the image feature to be fused associated with a same candidate bounding box.

An object detection unit 550, is configured to perform object detection on the deep fusion feature.

In some examples, the radar feature obtaining unit 520 performing radar point sampling according to the candidate bounding box to obtain radar points to be processed includes the following.

For any candidate bounding box, an expansion process is performed on the candidate bounding box to obtain a processed candidate bounding box.

Within the processed candidate bounding box, K1 radar points which are closest to the center point of the processed candidate bounding box are selected, and the selected radar points are designated as the radar points to be processed, where K1 is an integer and is greater than 1.

In some examples, for any candidate bounding box, an expansion coefficient of the candidate bounding box is determined according to a distance from the center point of the candidate bounding box to the origin, and is positively correlated with the distance.

In some examples, for any processed candidate bounding box, when the number of radar points within the processed candidate bounding box is less than K1, K1 radar points to be processed are obtained by a supplement based on zero-padding.

In some examples, the feature fusion unit 540 performing feature deep fusion on the radar features to be fused and the image feature to be fused by using the cross-attention mechanism to obtain a deep fusion feature includes the following.

An object query Query is generated by using a fully connected network according to the image feature to be fused.

A key Key and a value Value are respectively generated by using a fully connected network according to the radar features to be fused.

An attention matrix is generated according to the Query and the Key.

A deep fusion feature is determined according to the attention matrix and the Value.

In some examples, the feature fusion unit 540 generates the attention matrix according to the Query and the Key in the following manner:

$$A = Query * Key^T$$

Where A is the attention matrix.

The feature fusion unit 540 determines the deep fusion feature according to the attention matrix and the Value in the following manner:

$$C = softmax(\frac{A}{\sqrt{d}}) * Value$$

Where C is the deep fusion feature and d is the normalization factor.

The examples of the present disclosure provide an electronic device including a processor and a memory, where the memory stores machine-executable instructions that can be executed by the processor, and the processor is configured to execute the machine-executable instructions to implement the object detection method described above.

FIG. 6 is a schematic diagram of a hardware structure of the electronic device according to an example of the present disclosure. The electronic device may include a processor 601, a memory 602 in which machine-executable instructions are stored. The processor 601 and the memory 602 may communicate via a system bus 603. Also, the processor 601 may perform the object detection method described above by reading and executing machine-executable instructions corresponding to the object detection logic and stored in the memory 602.

Memory 602 referred to herein may be any electronic, magnetic, optical, or other physical storage device that may contain or store information, such as executable instructions, data, and the like. A machine-readable storage medium may be, for example, an random access memory (RAM), a volatile memory, a non-volatile memory, a flash memory, a storage drive (such as a hard drive), a solid state disk, any type of storage disc (such as an optical disc, DVD, etc.), or a similar storage medium, or a combination thereof.

In some examples, a machine-readable storage medium is also provided, such as the memory 602 in FIG. 6, which stores machine-executable instructions that, when executed by a Processor, cause the processor to perform the aforementioned object detection method. For example, the storage medium may be an ROM, an RAM, a CD-ROM, a magnetic tape, a floppy disk, an optical data storage device, and the like.

It is noted that relational terms such as "first" and "second" and the like may be used herein only to distinguish one entity or operation from another entity or operation without necessarily requiring or implying any such actual relationship or order between such entities or operations. Moreover, the terms "comprises," "comprising", or any other variation thereof, are intended to cover a non-exclusive inclusion, such that a process, a method, an article, or an apparatus that comprises a list of elements does not only include those elements but may include other elements not expressly listed or inherent to such process, method, article, or apparatus. Without further limitation, an element defined by the phrase "comprising a..." does not preclude the presence of additional identical elements in the process, method, article, or apparatus that includes the element.

The above description is only a preferred example of the present disclosure, and is not intended to limit the present disclosure. Any modification, equivalent substitution, improvement, etc. made within the spirit and principle of the present disclosure shall fall within the scope of the present disclosure.

**Claims**

1. An object detection method, comprising:

   determining at least one candidate bounding box according to one or more object queries;
   for any one of the at least one candidate bounding box,
   performing radar point sampling according to the candidate bounding box to obtain radar points to be processed, and performing feature extraction on the radar points to be processed to obtain radar features to be fused; and
   performing image feature sampling according to the candidate bounding box to obtain an image feature to be fused;
   performing deep feature fusion on the radar features to be fused and the image feature to be fused which are associated with each other, by using a cross-attention mechanism, to obtain a deep fusion feature, wherein the radar features to be fused and the image feature to be fused associated with each other are the radar features and the image feature associated with a same candidate bounding box; and
   performing object detection on the deep fusion feature.

2. The method according to claim 1, wherein for any one of the at least one candidate bounding box, performing radar point sampling according to the candidate bounding box to obtain the radar points to be processed comprises:

   for any one of the at least one candidate bounding box, performing an expansion process on the candidate bounding box to obtain a processed candidate bounding box;
   within the processed candidate bounding box, selecting K1 radar points which are closest to a center point of the processed candidate bounding box, and designating the selected radar points as the radar points to be processed, wherein K1 is an integer and is greater than 1.

3. The method according to claim 2, wherein for any one of the at least one candidate bounding box, an expansion coefficient of the candidate bounding box is determined according to a distance from the center point of the candidate bounding box to an origin, and is positively correlated with the distance.

4. The method according to claim 2, wherein for any processed candidate bounding box, in response to determining that a number of radar points within the processed candidate bounding box is less than K1, K1 radar points to be processed are obtained by a supplement based on zero-padding.

5. The method according to claim 1, wherein performing deep feature fusion on the radar features to be fused and the image feature to be fused by using the cross-attention mechanism to obtain the deep fusion feature comprises:

   generating an object query Query by using a fully connected network according to the image feature to be fused;
   respectively generating a key Key and a value Value by using a fully connected network according to the radar features to be fused;
   generating an attention matrix according to the Query and the Key;
   determining a deep fusion feature according to the attention matrix and the Value.

6. The method according to claim 5, wherein generating the attention matrix according to the Query and the Key is implemented by:

$$A = \text{Query} * Key^T$$

   wherein A is the attention matrix; and determining the deep fusion feature according to the attention matrix and the Value is implemented by:

$$C = softmax(\frac{A}{\sqrt{d}}) * Value$$

   wherein C is the deep fusion feature and d is a normalization factor.

7. The method according to any one of claims 1 to 6, wherein the method is applied to a vehicle equipped with at least one radar and a plurality of cameras, and the method further comprises:

   acquiring data captured by the at least one radar to generate a radar point cloud before performing radar point sampling according to the candidate bounding box; and/or
acquiring a plurality of frames of images captured at a same time by the plurality of cameras before performing image feature sampling according to the candidate bounding box.

8. The method according to claim 7, wherein performing radar point sampling according to the candidate bounding box comprises: performing radar point sampling on the radar point cloud according to the candidate bounding box; and/or
performing image feature sampling according to the candidate bounding box, comprising:

   performing image feature extraction on the plurality of frames of images by using a feature extraction model to obtain a plurality of image feature maps; and
   performing image feature sampling on the plurality of image feature maps according to the candidate bounding box.

9. The method according to claim 8, wherein performing image feature sampling on the plurality of image feature maps according to the candidate bounding box comprises:

   taking the center point of the candidate bounding box as a reference point, and projecting the reference point onto each of the image feature maps through coordinate system conversion to obtain a feature point corresponding to the reference point in each of the image feature maps; and
   performing feature aggregation on the obtained feature points to obtain an aggregation feature as the image feature to be fused.

10. The method according to claim 9, wherein an initial object query is generated by random initialization, and the method further comprises:
the object query is iteratively updated by using the aggregation feature to optimize performance of the radar point sampling and the image feature sampling.

11. The method according to any one of claims 1 to 10, wherein performing feature extraction on the radar points to be processed to obtain the radar features to be fused comprises:
increasing dimensionality of original features of the radar points to be processed by utilizing a neural network, to obtain the radar features to be fused.

12. An object detection apparatus, comprising:

a determining unit, configured to determine at least one candidate bounding box according to one or more object queries;

a radar feature obtaining unit, configured to, for any one of the at least one candidate bounding box, perform radar point sampling according to the candidate bounding box to obtain radar points to be processed, and perform feature extraction on the radar points to be processed to obtain radar features to be fused;

an image feature obtaining unit, configured to, for any one of the at least one candidate bounding box, perform image feature sampling according to the candidate bounding box to obtain an image feature to be fused;

a feature fusion unit, configured to, for any one of the at least one candidate bounding box, perform deep feature fusion on the radar features to be fused and the image feature to be fused which are associated with each other, by using a cross-attention mechanism, to obtain a deep fusion feature; wherein the radar features to be fused and the image feature to be fused associated with each other are radar features and the image feature associated with a same candidate bounding box; and

an object detection unit, configured to perform object detection on the deep fusion feature.

13. The apparatus according to claim 12, wherein for any one of the at least one candidate bounding box, the radar feature obtaining unit performing radar point sampling according to the candidate bounding box to obtain the radar points to be processed comprises:

for any one of the at least one candidate bounding box, performing an expansion process on the candidate bounding box to obtain a processed candidate bounding box;

within the processed candidate bounding box, selecting K1 radar points which are closest to a center point of the processed candidate bounding box, and designating the selected radar points as the radar points to be processed, wherein K1 is an integer and is greater than 1;

for any one of the at least one candidate bounding box, an expansion coefficient of the candidate bounding box is determined according to a distance from the center point of the candidate bounding box to an origin, and is positively correlated with the distance;

for any processed candidate bounding box, in response to determining that a number of radar points within the processed candidate bounding box is less than K1, K1 radar points to be processed are obtained by a supplement based on zero-padding;

and/or,

the feature fusion unit performing deep feature fusion on the radar features to be fused and the image feature to be fused by using the cross-attention mechanism to obtain the deep fusion feature comprises:

generating an object query Query by using a fully connected network according to the image feature to be fused;

respectively generating a key Key and a value Value by using a fully connected network according to the radar features to be fused;

generating an attention matrix according to the Query and the Key;

determining a deep fusion feature according to the attention matrix and the Value;

wherein the feature fusion unit generates the attention matrix according to the Query and the Key in a manner of:

$$A = Query * Key^T$$

wherein A is the attention matrix; and the feature fusion unit determines the deep fusion feature according to the attention matrix and the Value in a manner of:

$$C = softmax(\frac{A}{\sqrt{d}}) * Value$$

wherein C is the deep fusion feature and d is a normalization factor.

14. An electronic device comprising a processor and a memory, wherein the memory stores machine-executable instructions that are executed by the processor, and the processor is configured to execute the machine-executable instructions to perform the method according to any one of claims 1 to 11.

15. A machine-readable storage medium storing machine-executable instructions that when executed by a processor, cause the processor to perform the method according to any one of claims 1 to 11.

| | |
|---|---|
| Determine a candidate bounding box according to one or more object queries | S100 |

↓

| | |
|---|---|
| Obtain radar points to be processed by performing radar point sampling according to the candidate bounding box, and obtain radar features to be fused by performing feature extraction on the radar points to be processed | S110 |

↓

| | |
|---|---|
| Obtain an image feature to be fused by performing image feature sampling according to the candidate bounding box | S120 |

↓

| | |
|---|---|
| For the radar features to be fused and the image feature to be fused that are associated with each other, perform deep feature fusion on the radar features to be fused and the image feature to be fused by using the cross-attention mechanism, so as to obtain a deep fusion feature; where the radar features to be fused and the image features to be fused that are associated with each other are radar features to the fused and an image feature to the fused associated with a same candidate bounding box | S130 |

↓

| | |
|---|---|
| Perform object detection on the deep fusion feature | S140 |

**FIG. 1**

**FIG. 2**

**FIG. 3**

**FIG. 4**

Object Detection Apparatus

510

520

540

550

| Determining Unit | Radar Feature Obtaining Unit | Feature Fusion Unit | Object Detection Unit |

530

Image Feature Obtaining Unit

**FIG. 5**

Processor — 601

System Bus 603

602

Memory

Machine-executable Instructions

**FIG. 6**

## INTERNATIONAL SEARCH REPORT

| International application No. |
| --- |
| **PCT/CN2024/084447** |

| A. | CLASSIFICATION OF SUBJECT MATTER |
| --- | --- |

G06V20/56(2022.01)i;  G06V10/80(2022.01)i

According to International Patent Classification (IPC) or to both national classification and IPC

| B. | FIELDS SEARCHED |
| --- | --- |

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNABS, CNTXT, CNKI, DWPI, VEN, USTXT, EPTXT, WOTXT, IEEE: 查询, 候选, 初始, 框, 区域, 目标, 检测, 雷达, 点云, 图像, 图片, 相机, 摄像, 融合, 交叉注意力, 神经网络, query+, candidate?, initial, frame?, region?, target?, detect+, radar, point?, cloud, image?, picture?, camera?, fus+, cross attention, netural network.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116524445 A (SHANGHAI GOLDWAY INTELLIGENT TRANSPORTATION SYSTEMS CO., LTD.) 01 August 2023 (2023-08-01) description, paragraphs 35-98 | 1-15 |
| X | CN 114782785 A (HUAWEI TECHNOLOGIES CO., LTD.) 22 July 2022 (2022-07-22) description, paragraphs 78-159, and figures 6 and 15 | 1-15 |
| A | CN 110222686 A (TENCENT TECHNOLOGY (SHENZHEN) CO., LTD.) 10 September 2019 (2019-09-10) entire document | 1-15 |
| A | CN 115861601 A (TSINGHUA UNIVERSITY) 28 March 2023 (2023-03-28) entire document | 1-15 |
| A | KR 20190131207 A (IUCF HYU) 26 November 2019 (2019-11-26) entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 May 2024** | **05 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 693 222 A1

**INTERNATIONAL SEARCH REPORT**
Information on patent family members

International application No.

**PCT/CN2024/084447**

| Patent document cited in search report | | | Publication date (day/month/year) | Patent family member(s) | | | Publication date (day/month/year) |
|---|---|---|---|---|---|---|---|
| CN | 116524445 | A | 01 August 2023 | None | | | |
| CN | 114782785 | A | 22 July 2022 | None | | | |
| CN | 110222686 | A | 10 September 2019 | CN | 110222686 | B | 07 May 2021 |
| CN | 115861601 | A | 28 March 2023 | CN | 115861601 | B | 29 December 2023 |
| KR | 20190131207 | A | 26 November 2019 | KR | 102108953 | B1 | 11 May 2020 |

Form PCT/ISA/210 (patent family annex) (July 2022)

16